# EUROPÄISCHE PATENTSCHRIFT

(11) **EP 1 350 645 B1**
(45) Veröffentlichungstag und Bekanntmachung des Hinweises auf die Patenterteilung: **04.01.2006**
(21) Anmeldenummer: 03002255.2
(22) Anmeldetag: 01.02.2003
(51) Int. Cl.: B60H 1/00

(54) **Anordnung und Verfahren zur Trocknung eines Verdampfers in einer Klimaanlage**
Method and apparatus for drying an evaporator in an air conditioning system
Procédé et dispositif pour le séchage d'un évaporateur dans un système de conditionnement d'air

(30) Priorität: 26.03.2002 DE 10213347
(43) Veröffentlichungstag der Anmeldung: 08.10.2003
(73) Patentinhaber: Modine Manufacturing Company, Racine/Wisconsin 54403-2552 (US)
(72) Erfinder: Alber, Samuel, Dipl.-Ing., 72654 Neckartenzlingen (DE); Kamsma, Huub R., Dipl.-Ing., 70794 Filderstadt (DE); Thomas, Arthur, Dipl.-Ing., 5401 PE Uden (NL); Williams, Marc D., Dipl.-Ing., 72654 Neckartenzlingen (DE); List, Maria, Dipl.-Ing., 71679 Asperg (DE); Reichler, Mark, Dipl.-Ing., 70569 Stuttgart (DE); Vetter, Frank, Dr., 73765 Neuhausen (DE)
(74) Vertreter: Wolter, Klaus-Dietrich

(56) Entgegenhaltungen:
- EP-A- 0 913 283
- DE-A- 3 149 252
- FR-A- 2 743 027
- PATENT ABSTRACTS OF JAPAN vol. 017, no. 027 (M-1355), 19. Januar 1993 (1993-01-19) & JP 04 252723 A (NIPPONDENSO CO LTD;OTHERS: 01), 8. September 1992 (1992-09-08)

## Beschreibung

Die Erfindung betrifft eine Anordnung in einer Klimaanlage für Kraftfahrzeuge, mit einem Heizer und einem Verdampfer (zwei Wärmetauscher), die in einem Luftführungsgehäuse mit ihren Wärmetauscherkernen etwa in einer gemeinsamen Ebene liegend angeordnet sind, oder so angeordnet sind, dass die Ebenen der beiden Wärmetauscherkerne einen Winkel einschließen; das Luftführungsgehäuse weist mindestens einen Lufteintritt und mehrere Luftaustritte auf, denen Verschlußmechanismen zugeordnet sind.
Ferner betrifft die Erfindung zwei unterschiedliche Verfahren zur Trocknung der Verdampferoberfläche in einer Anordnung einer Klimaanlage, bei dem die Gebläseluft durch den Verdampfer geschickt wird, um danach durch einen Auslass in die Umgebung abgeleitet zu werden.

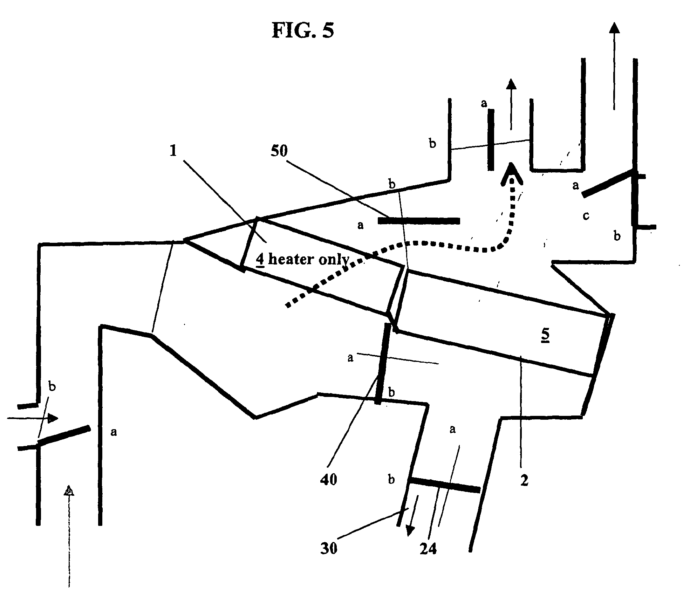

Bei vielen Klimaanlagen, wie z.B. JP 04252723, liegen der Heizer und der Verdampfer in Luftströmungsrichtung gesehen hintereinander, wobei die Ebenen der Wärmetauscherkerne etwa parallel zueinander angeordnet sind. Als Wärmetauscherkern wird das sogenannten Netz des Wärmetauschers bezeichnet, das aus einer Vielzahl von Rohren mit dazwischen angeordneten Wellrippen oder dergleichen besteht, wobei die Luft als das eine wärmetauschende Medium etwa senkrecht zu den erwähnten Ebenen durch die Wellrippen und das andere wärmetauschende Medium durch die in den erwähnten Ebenen liegenden Rohre strömt.
Es gibt jedoch auch Anordnungen in Klimaanlagen, bei denen die Ebenen der Wärmetauscherkerne eine gemeinsame Ebene darstellen oder sich schneiden, wobei sie einen bestimmten Winkel einschließen.
Die Anordnung aus der DE 195 18 281 A1 stimmt mit dem Oberbegriff überein, denn dort sind der Verdampfer und der Heizer etwa in einer gemeinsamen Ebene liegend angeordnet. Diese Anordnung besitzt eine sehr kompakte Bauweise, was für Anordnungen in Kraftfahrzeugen von Vorteil ist. Das Problem, das durch die am Wärmetauscherkern des Verdampfers auftretende Feuchtigkeit verursacht wird, die sich beispielsweise an den Frontscheiben des Kraftfahrzeuges niederschlägt, wodurch ein nicht hinnehmbarer Zustand verursacht wird, ist dort dadurch gelöst, dass die Anlage im Re - heat - Betrieb arbeitet. Wie die dortige Fig. 5 zeigt, wird die Luft zunächst im Verdampfer abgekühlt, um danach im Heizer wieder erwärmt zu werden. Der Re - heat - Betrieb ist notwendig um getrocknete Luft in den Fahrzeuginnenraum leiten zu können. Aus energieökonomischer Sicht ist jedoch der Re - heat - Betrieb eher nachteilig, da der gesamte Luftstrom zunächst mit entsprechendem Energieaufwand des Verdampfers abgekühlt wird, um danach, wiederum mit Einsatz von Energie, erwärmt zu werden. Die Trocknung des Wärmetauscherkerns des Verdampfers ist in der DE '281 nicht angesprochen worden. Möglicherweise wird dazu eine elektrische Heizung vor dem Verdampfer angeordnet. Diese Art der Trocknung erfordert jedoch entsprechenden Einsatz elektrischer Energie und eben die Heizung selbst. Beides ist oft nicht wünschenswert. In sämtlichen mit dieser bekannten Anordnung ausführbaren Betriebsmodi durchströmt die Gebläseluft zuerst den Verdampfer und danach wahlweise den Heizer.

Eine elektrische Heizung zur Beschleunigung der Verdampfertrocknung ist bei der Klimaanlage vorgesehen, die aus DE 197 31 369 C1 bekannt ist und bei der Verdampfer und Heizer in einem Luftströmungskanal in Luftströmungsrichtung gesehen hintereinander angeordnet sind. Verdampfer und Heizer sind also nicht in einer gemeinsamen, durch die Wärmetauscherkerne gehenden, Ebene angeordnet. Die Ebenen kreuzen sich auch nicht und schließen demzufolge keinen Winkel ein. Diese Klimaanlage kann aber muß nicht zwangsläufig im Re - heat - Betrieb arbeiten, um die Verdampferluft zunächst zu kühlen und danach wieder aufzuheizen, um sie dadurch zu entfeuchten. Im Re - heat - Betrieb wird die Verdampferoberfläche nass. Die Feuchtigkeit führt beim Neustart des Antriebsmotors bzw. der Klimaanlage dazu, dass diese in den Innenraum gelangen und zum Beschlag der Scheiben führen kann. In der DE '369 ist, wenn die Notwendigkeit der Trocknung des Verdampfers von einem Sensor signalisiert wird, vorgesehen, dass ein Teil der zugeführten Gebläseluft abgezweigt und durch den Verdampfer geschickt wird, wobei die durchströmende, danach feuchte Luft durch eine verschließbare Abluft - und Kondensatöffnung an die Umgebung abgegeben wird. Die Merkmale des Oberbegriffs des Verfahrens zur Trocknung der Verdampferoberfläche können aus diesem Dokument hergeleitet werden. Je nach Zustand der Gebläseluft kann die Trocknung des Verdampfers relativ schnell gehen, aber auch länger dauern. Damit die Verdampfertrocknung im angemessenen Zeitraum beendet werden kann, ist vor dem Verdampfer die bereits angesprochene elektrische Heizvorrichtung angeordnet, die zu Lasten des Primär - Energieverbrauchs geht.

Zur weiteren Minimierung des Primär - Energieverbrauchs ist es seit langem bekannt, die Klimaanlage als Wärmepumpe zu betreiben, wobei der Verdampfer als Kondensator / Gaskühler eingesetzt wird. Insbesondere in, oder besser, vor den Umschaltphasen von Verdampferbetrieb auf Kondensatorbetrieb ist es wichtig, dass der Wärmetauscherkern des Verdampfers getrocknet wird, um die Aufnahme von Feuchtigkeit durch die ihn außen durchströmende Luft zu minimieren.

Die Aufgabe der Erfindung besteht darin, die im Oberbegriff bezeichnete Anordnung dahingehend zu verbessern, dass mit geringem Energieaufwand die Verdampfertrocknung erreicht wird, ohne eine elektrische Zusatzheizung vorzusehen. Außerdem soll ein mit geringem Energieaufwand durchführbares Verfahren zur Trocknung des Verdampfers angegeben werden.

Diese Aufgabe wird erfindungsgemäß dadurch gelöst, dass innerhalb des Luftführungsgehäuses (in Strömungsrichtung der Gebläseluft in den genannten Betriebsarten gesehen) vor und hinter den zwei Wärmetauschern jeweils mindestens ein verstellbares Luftleitelement angeordnet ist, mittels derer die Durchströmung beider Wärmetauscher beeinflussbar ist,
dass eine Betriebsart Trocknung des Wärmetauscherkerns des Wärmetauschers / Verdampfers vorgesehen ist, wobei das vor beiden Wärmetauschern angeordnete Luftleitelement während des Trocknungsvorgangs die Durchströmung des Wärmetauscherkerns des Verdampfers (Wärmetauschers) im wesentlichen blockiert und das hinter beiden Wärmetauschern angeordnete Luftleitelement geöffnet ist, so dass der Gebläseluftstrom zuerst den Heizer (Wärmetauscher) und dann den Verdampfer (Wärmetauscher) durchströmt,
und dass ein zumindest während des Trocknungsvorgangs geöffneter Feuchtluftauslass im Luftführungsgehäuse vorgesehen ist, durch den den Verdampfer (Wärmetauscher) außen durchströmende, ihn trocknende und dadurch feucht gewordene Luft an die Umgebung abführbar ist.

Diese Merkmale lösen die Aufgabenstellung, denn die Trocknung des Verdampfers kann ohne zusätzliche elektrische Heizung lediglich durch die Nutzung des in jedem Fall notwendigen Heizers, der innen von der warmen Kühlflüssigkeit des Antriebsmotors durchströmbar ist, erfolgen. Zur Trocknung der Verdampferluft ist es auch nicht erforderlich einen energieaufwendigen Re-heat-Betrieb vorzusehen. Zur Abführung der feuchten Luft ist ein verschließbarer separater Auslass im Luftführungsgehäuse vorgesehen. Eine ständig offene Kondensatauslassöffnung geringen Querschnitts befindet sich an einer tief liegenden Stelle im Luftführungsgehäuse.

Das hinter den beiden Wärmetauschern angeordnete Luftleitelement besitzt eine solche Stellung, dass zumindest ein Teil der erwärmten Luft in Richtung des Verdampfers umgelenkt wird.
Während des Trocknungsvorgangs kann der zur Frontscheibe führende Luftauslass geöffnet sein, um einen Teil der Trockenluft zur Vermeidung von Scheibenbeschlag abzuzweigen. Die anderen Auslässe sind während des Trocknungsvorganges vorzugsweise geschlossen, um denselben in angemessenem kurzen Zeitraum abschließen zu können.
Von Vorteil ist es, wenn zur Trocknung der Verdampferoberfläche, die nach dem Abschalten des Antriebsmotors vorhandene Restwärme genutzt wird, weshalb der Trocknungsvorgang nach dem Abstellen des Antriebsmotors vorzugsweise automatisch eingeleitet, durchgeführt und beendet wird. Ein entsprechendes Verfahren zur Trocknung ist Gegenstand des Anspruchs 9.
Wird der Trocknungsvorgang bei laufendem Antriebsmotor durchgeführt, ist es von Vorteil, wenn mit dem Beginn des Trocknungsvorgangs oder kurz vorher, der Verdampfer auf Kondensator / Gaskühlerbetrieb (Wärmepumpenbetriebsweise) geschaltet wird. Dadurch wird der Trocknungsvorgang beschleunigt. Dieses Verfahren ist Gegenstand des Anspruchs 8. Die Verfahren gemäß den Ansprüchen 8 und 9 und die Weiterbildung des Anspruchs 9 gemäß Anspruch 10 lassen sich nicht nur an einer Klimaanlage mit den Merkmalen des Anspruchs 1 realisieren, sondern beispielsweise auch an Klimaanlagen, bei denen - in Luftströmungsrichtung der Gebläseluft gesehen - erst der Heizer und dann der Verdampfer hintereinander angeordnet sind, also bei denen die Ebenen der beiden Wärmetauscherkerne parallel zueinander liegen.
Weitere Merkmale ergeben sich aus den anderen Ansprüchen und aus der nachfolgenden Beschreibung von Ausführungsbeispielen, wozu auf die beiliegenden Zeichnungen Bezug genommen wird.

Die Figuren zeigen Folgendes:
Fig. 1 Trocknungsvorgang bei einem ersten Ausführungsbeispiel;
Fig. 2 Wärmepumpenbetrieb und Klimatisierung;
Fig. 3 Frischluftbetrieb;
Fig. 4 Heizbetrieb, Volllast;
Fig. 5 Heizbetrieb, nur Heizer
Fig. 6 Trocknungsvorgang bei einem zweiten Ausführungsbeispiel;
Fig. 7 Ansicht auf das Luftführungsgehäuse;
Fig. 8 Schnitt gemäß A-A aus Fig. 3;
Fig. 9 Schaltbild einer Klimaanlage mit Wärmepumpen - und Klimabetrieb;
Fig. 10 Schaltbild eines Kühlkreislaufes, eingeschlossen die Funktion "Trocknung"

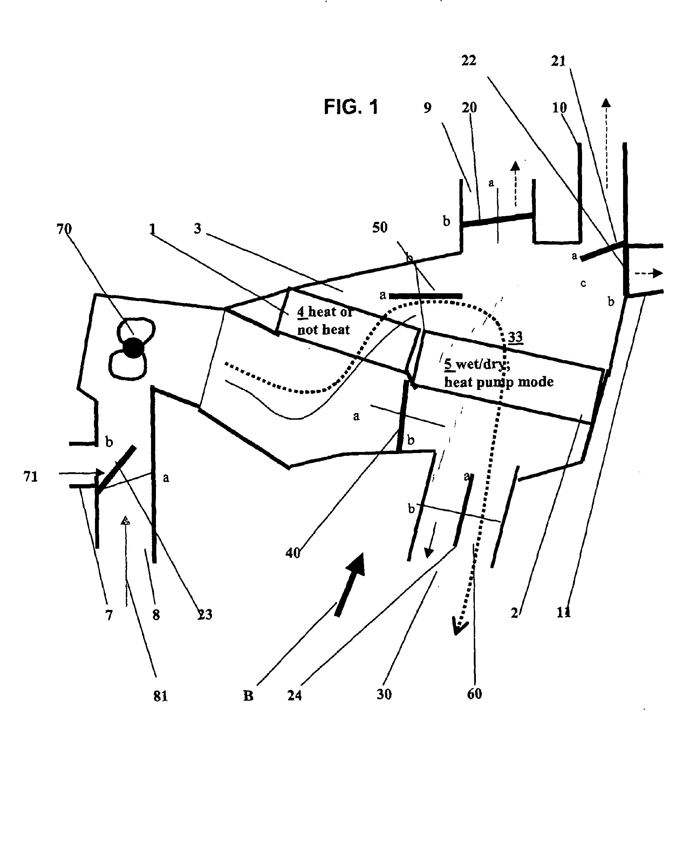

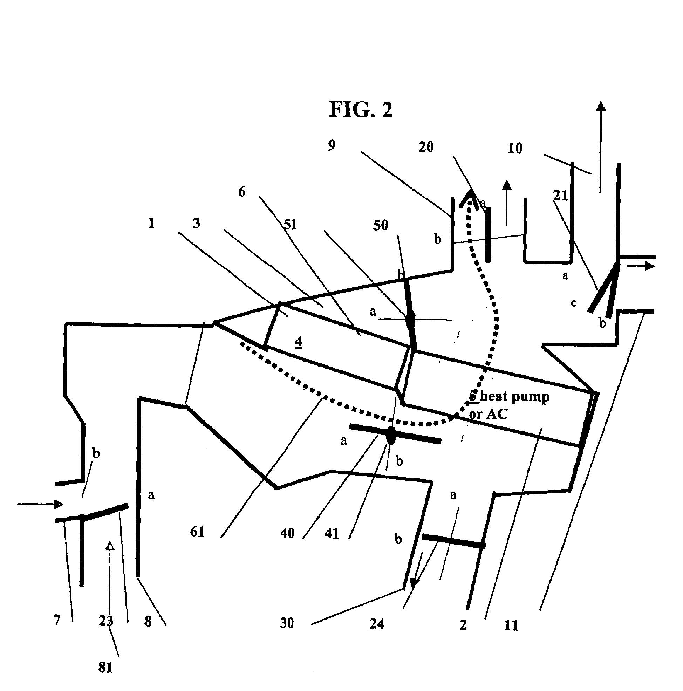

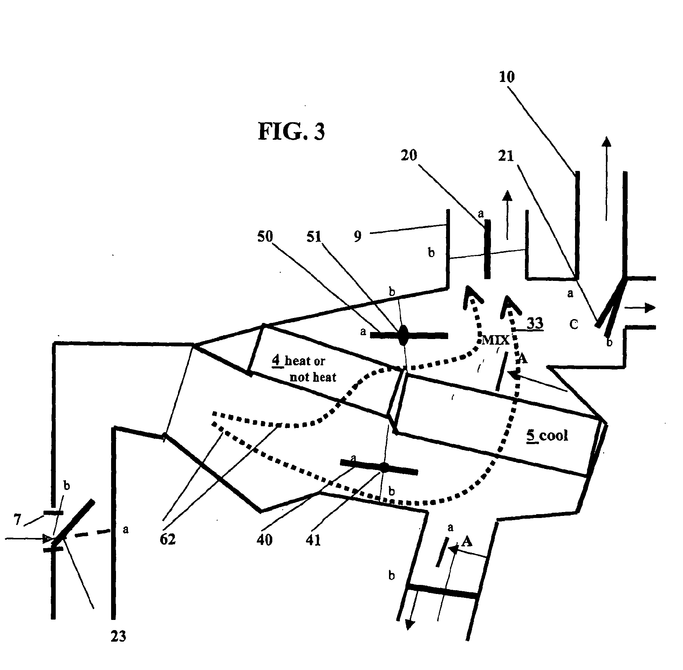

Die gezeigten Darstellungen sind prinzipieller Art. Insbesondere lassen sie keine Rückschlüsse dahingehend zu, wie das Luftführunsgehäuse **3** in der praktischen Ausführung im Einzelnen tatsächlich gestaltet ist. Eine Ausnahme bildet die Anordnung des Feuchtluftauslasses **30,** der sich im Luftführungsgehäuse **3** befindet und vorzugsweise senkrecht zum Wärmetauscherkern **5** des Verdampfers **2** im Luftführungsgehäuse **3** angeordnet ist, damit die feuchte Luft auf möglichst kurzem Weg und ohne wesentlich umgelenkt zu werden in die Umgebung abgeleitet werden kann. Ferner besitzt das Luftführungsgehäuse **3** in bekannter Art einen Frischlufteintritt **7,** einen Eintritt **8** für Umluft, die aus einem nicht gezeigten Passagierraum des Kraftfahrzeugs kommt und die mit der Frischluft gemischt werden kann. Dafür ist eine verstellbare Klappe **23** vorgesehen. Darüber hinaus gibt es den Luftaustritt **9,** dem die verstellbare Klappe **20** zugeordnet ist, wobei dieser Austritt **9** zum Frontraum und zu den Seiten im Passagierraum führt. Der Luftaustritt **10** mit der verstellbaren Klappe **21** dient der Zuführung von Luft zur Frontscheibe das Kraftfahrzeugs. Schließlich gibt es noch den Luftaustritt **11** mit seiner Klappe **22** zum Fußraum des Kraftfahrzeuges. Die Klappen **21, 22, 23, 24,** können zwischen der Offenstellung **a** und der Schließstellung **b** jede beliebige Zwischenstellung einnehmen. Darüber hinaus geht aus allen Darstellungen hervor, dass in Luftströmungsrichtung gesehen, die in Fig. 1 durch den Pfeil **60** und beispielsweise in Fig. 3 durch die Pfeile **62** angezeigt ist, vor und hinter den Wärmetauschern **1** und **2** jeweils ein Luftleitelement **40** bzw. **50** angeordnet ist. Die Luftleitelemente **40** und **50** sind beiden Wärmetauschern **1, 2** zugeordnet, d. h., durch ihre Betätigung kann sowohl die Durchströmung des Wärmetauschers 1 als auch die Durchströmung des Wärmetauschers **2** beeinflusst werden. Die Luftleitelemente **40, 50** befinden sich mit ihren Verstellachsen **41, 51** (Fig.3) etwa in einer Ebene, die zwischen beiden Wärmetauschern **1, 2** liegt. Darüber hinaus sind beide Wärmetauscher **1, 2** so angeordnet, dass ihre Wärmetauscherkerne **4, 5** etwa in einer Ebene **6** liegen d. h., sie sind nebeneinander angeordnet - sie könnten aber selbstverständlich auch übereinander angeordnet sein. Der Wärmetauscher **1** ist ein Heizer **1,** der auf der Innenseite von der warmen Kühlflüssigkeit des nicht gezeigten Antriebsmotors in regelbarer Weise durchströmt wird. In Betriebsphasen des Kraftfahrzeuges, in denen keine überschüssige Wärme vorhanden ist, kann auf die Durchströmung des Heizers **1** verzichtet werden. Der Wärmetauscher **2** ist der Verdampfer **2** der Klimaanlage, der vermittels bekannter Regelungstechnik im ansonsten hier ebenfalls nicht gezeigten Klimakreislauf in den Wärmepumpenmodus schaltbar ist. Auf der Primärseite des Verdampfers / Wärmepumpe **2** strömt in regelbarer Weise ein Kältemittel. Auf der Außenseite des Heizers **1** und des Verdampfers / Wärmepumpe **2** strömt in regelbarer Weise Luft, die vom Gebläse **70** gefördert wird.
Es sollte ersichtlich sein, dass die Anordnung in allen Betriebsmodi einsetzbar ist und hervorragende Eigenschaften besitzt. Die Bezugszeichen wurden hauptsächlich in den Fig. 1 und 2 eingetragen. In den anderen Figuren wurden überwiegend nur solche Bezugszeichen eingetragen, die zur Beschreibung der jeweiligen Figur von Interesse sind. Wo in der Beschreibung der anderen Figuren dort nicht eingetragene Bezugszeichen genannt sein sollten, können diese aus den Fig. 1 und 2 entnommen werden.
Es gibt Betriebssituationen, die dazu führen, dass sich an der Oberfläche des Verdampfers **2** Feuchtigkeit niederschlägt - auch Eisbildung kann auftreten. Diese Feuchtigkeit muss entfernt werden, jedenfalls darf es nicht zugelassen werden, dass sich niederschlagende Feuchtigkeit in den Passagierraum des Kraftfahrzeugs gelangt, weil dies dort zum Beschlagen der Scheiben führt. Gemäß Fig. 1 ist eine Betriebsweise "Trocknung des Verdampfers **2**" vorgesehen, um die vorstehend beschriebenen Probleme zu vermeiden. In dieser Betriebsweise kann bei Sommerbetrieb warme Luft über den Frischlufteinlass **7** mittels eines Gebläses **70** in das Luftführungsgehäuse **3** gelangen. Die Frischluft kann mit Umluft aus dem ebenfalls nicht gezeigten Fahrzeuginnenraum gemischt werden, die über den Umlufteinlass **8** einströmen kann. Das Mischungsverhältnis ist mittels der Klappe **23** regelbar. Das vor dem Heizer **1** und dem Verdampfer **2** angeordnete Luftleitelement **40** befindet sich in der Schließstellung **b,** in der die Durchströmung des Verdampfers **2** blockiert ist. Die Öffnungsstellung der Luftleitelemente **40, 50** ist jeweils mit **a** gekennzeichnet worden. Das andere, hinter dem Heizer **1** und dem Verdampfer **2** angeordnete, Luftleitelement **50** befindet sich in der Öffnungsstellung **a.** Die Gebläseluft durchströmt bei der Trocknung erkennbar zuerst den Heizer **1** und danach den Verdampfer **2.** Diese Öffnungsstellung **a** des Luftleitelements **50** ist gleichzeitig eine solche, dass das Luftleitelement **50** die durch den Heizer **1** kommende Luft oder einen wesentlichen Anteil davon, umlenkt und auf den Verdampfer **2** leitet. Das Luftleitelement **50** kann aber muß nicht zwangsläufig eine gebogene Kontur aufweisen, um als Leitelement wirksamer zu sein. (nicht gezeigt) In diesem Betriebsmodus besitzt der Heizer **1** eine hohe Heizleistung, so dass die hindurch strömende Luft wesentlich erwärmt wird, wodurch sich die relative Luftfeuchtigkeit verringert. Diese warme Luft mit geringerer relativer Luftfeuchtigkeit ist in bester Weise geeignet, die äußere Oberfläche des Wärmetauscherkerns **5** des Verdampfers **2** zu trocknen. Bei diesem Trocknungsprozess nimmt die warme Luft Feuchtigkeit auf, wobei das Feuchtigkeitsaufnahmevermögen der Luft mit zunehmender Temperatur ebenfalls zunimmt. Die mit Feuchtigkeit beladene Luft **60** wird über den Feuchtluftausiass **30** an die Umgebung abgegeben. Dabei ist selbstverständlich die Klappe **24** in der Offenstellung **a.** Die Klappen **20, 22** an den Auslässen **9** und **11** soilten sich bei dieser Betriebsweise in ihren Schließstellungen **b** befinden, da ansonsten die Abführung der feuchten Luft **60** an die Umgebung zwar auch möglich aber nicht im erforderlichen Umfang oder mit der gewünschten Qualität oder im gewünschten kurzen Zeitraum gelingen könnte. Im Betriebsmodus "Trocknung" kann jedoch die Klappe **21** am Auslass **10,** der zur Windschutzscheibe führt, je nach Bedarf geöffnet werden, um die Windschutzscheibe mittels der von dem Heizer **1** erwärmten Luft beschlagfrei zu halten oder zu machen. Eine besonders schnelle Trocknung der äußeren Verdampferoberfläche ist möglich, wenn der Heizer **1** von der heißen Kühlflüssigkeit durchströmt wird und wenn zusätzlich etwa bei deren Beginn oder bereits kurz zuvor, der Verdampfer **2** auf Kondensator/Gaskühler, also auf Wärmepumpenbetrieb der Klimaanlage, geschaltet wird. Im Wärmepumpenbetrieb gibt der Kondensator/Gaskühler **2** der Klimaanlage Wärme an die ihn außen durchströmende Luft ab. Die Funktion des Verdampfers **2** im Klimakreislauf wird im Wärmepumpenbetrieb von einem anderen hier nicht gezeigten Kondensator / Gaskühler übernommen. Nach Abschluss der Trocknung kann die jeweils gewünschte nächste Betriebsweise eingestellt werden. Es versteht sich, dass Feuchtesensoren, Temperatursensoren und andere Automatisierungsmittel vorgesehen werden können, die z. B. auch das Erfordernis der Trocknung erkennen und den beschriebenen Vorgang selbsttätig einleiten, durchführen und beenden.

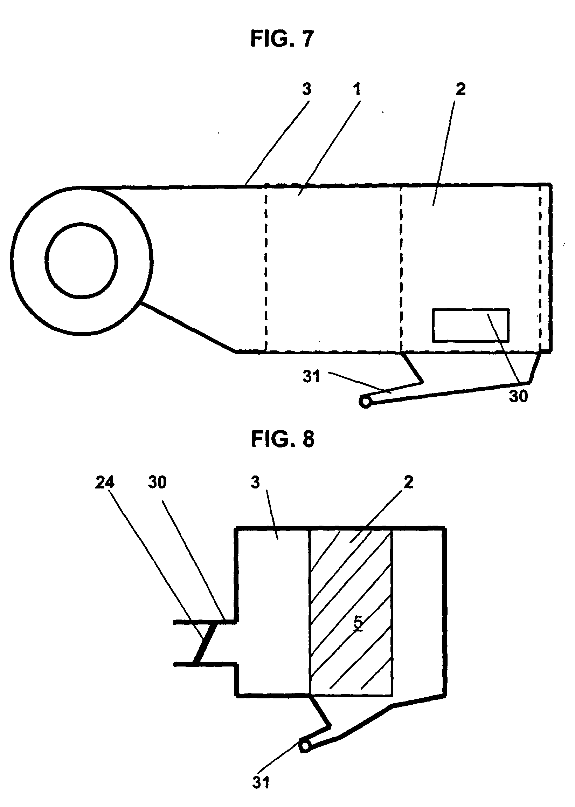

Die Anordnung kann, falls gewünscht auch in den Betriebsweisen "Wärmepumpe" **heat pump** und sogenannte "reine Klimatisierung" **AC** wirken, wobei der Luftstrom lediglich durch den Verdampfer **2** erwärmt bzw. abgekühlt wird. Diese Betriebsweisen sind in Fig. 2 dargestellt worden. Der Heizer **1** ist in diesen Betriebsweisen nicht aktiv, d. h., er muß nicht von warmer Kühlflüssigkeit durchströmt werden. Das Luftleitelement **40** ist in der Offenstellung **a** und das Luftleitelement **50** befindet sich in der Schließstellung **b.** Der in das Luftführungsgehäuse **3** eintretende Luftstrom **61** durchströmt den Wärmetauscher **2,** der der Kondensator / Gaskühler der Klimaanlage in der Wärmepumpenbetriebsweise ist. Der Luftstrom **61** wird dabei vorgewärmt und kann in den Fahrzeuginnenraum geleitet werden. In dieser und in den nachfolgend beschriebenen Betriebsweisen ist die Klappe **24** am Auslass **30** in der Schließstellung **b.**
Die in der Fig. 3 dargestellte Betriebsweise kann als die normale, weil überwiegend vorliegende, Betriebsweise bezeichnet werden. Beide Luftleitelemente **40** und **50** sind geöffnet. Die Luftströme **62** durchströmen gleichzeitig den Verdampfer **2** und den Heizer **1.** Beide Luftströme **62** vermischen sich hinter dem Verdampfer **2** und dem Heizer **1** in einem Mischraum **33.** Es ist aus der Darstellung erkennbar, dass vermittels der eingestellten Position der Luftleitelemente **40, 50** das Mischungsverhältnis beeinflussbar ist. Die klimatisierte Luft **62** kann wunschgemäß auf die entsprechenden Austritte **9, 10** und **11** verteilt werden, um einen behaglichen Fahrzeuginnenraum zu schaffen und trockene; d. h. nicht beschlagende Scheiben zu erhalten. Wird in dieser Betriebsweise der Heizer **1** mittels der heißen Kühlflüssigkeit beheizt, stellt sich im Mischraum **33** auch ein teilweiser Re - heat - Betrieb ein.

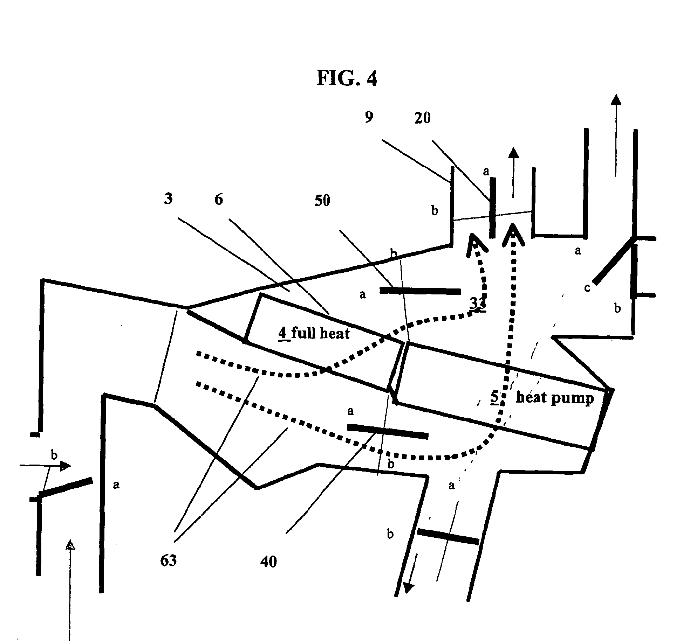

Die Fig. 4 unterscheidet sich bezüglich der Stellung der Luftleitelemente **40, 50** nicht deutlich von der Fig. 3. Es soll damit gezeigt werden, dass, beispielsweise im Winterbetrieb des Kraftfahrzeugs, durch Umschalten auf Wärmepumpenbetrieb am Wärmetauscher **2** bei gleichzeitig maximaler Heizleistung des Heizers **1** eine für jede Situation ausreichende Wärmemenge bereitgestellt werden kann. In aller Regel wird die Heizleistung des Heizers **1** groß genug sein, so dass der Wärmetauscher **2** (Wärmepumpe) lediglich im energiesparenden Teillastbetrieb betrieben werden muss. Es versteht sich, dass im Wärmepumpenbetrieb der Energie verbrauchende Kompressor in Betrieb sein muss.
In der Fig. 5 entspricht die Stellung der Luftleitelemente **40, 50** derjenigen aus Fig. 1. (Trocknung) Jedoch stellt die Fig. 5 eine Betriebsweise dar, in der ausschließlich mittels des Heizers **1** erwärmte Luft zur Verfügung gestellt wird. Im Unterschied zur Fig. 1 ist auch hier die Klappe **24** am Feuchtluftauslass **30** geschlossen und die Klappen **20** und **22** sind je nach Bedarf geöffnet.
Besonders vorteilhaft ist ein Trocknungsverfahren, dass unter Ausnutzung der Restwärme des Kühlwassers des abgestellten Antriebsmotors abläuft. Mittels der bereits erwähnten und bekannten Automatisierungsmittel wird nach dem Abstellen des Antriebsmotors der Trocknungsvorgang eingeleitet, durchgeführt und beendet. Die Gebläseluft wird dabei zu Lasten der Batterie des Kraftfahrzeuges erzeugt. Auch die nicht gezeigte elektrische Kühlmittelpumpe wird mittels der Batterie betrieben, damit die Zirkulation der Kühlflüssigkeit aufrecht erhalten wird, um die Restwärme möglichst umfassend zu nutzen. Ein solcher Trocknungsvorgang läuft ohne Wärmepumpenbetrieb ab, da die Klimaanlage bei abgestelltem Motor (bei Pkw's) nicht in Betrieb zu sein braucht. Außerdem liegt hier das Bedürfnis, das Trocknungsverfahren in möglichst kurzer Zeit zu beenden eher nicht vor, denn in aller Regel wird der Fahrer das Fahrzeug nach dem Abstellen des Motors für eine gewisse Zeit verlassen.

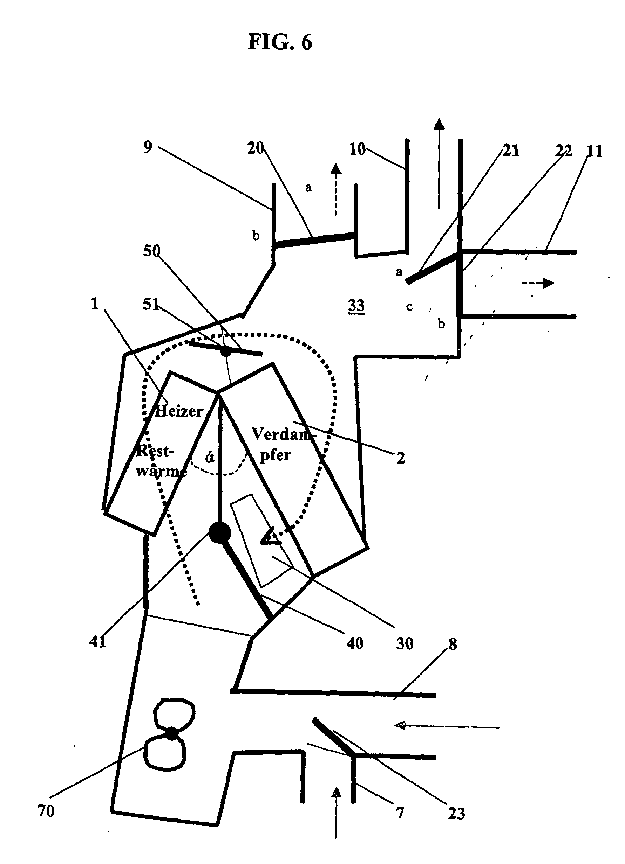

Die Fig. 6 zeigt den Trocknungsvorgang bei einem anderen Ausführungsbeispiel, bei dem der Heizer **1** und der Wärmetauscher / Verdampfer **2** mit ihren Wärmetauscherkernen **4** bzw. **5** nicht in einer Ebene **6** liegen, sondern einen im Bild nach unten gerichteten spitzen Winkel α einschließen. Dadurch kann das Luftführungsgehäuse **3** mit einer anderen, für bestimmte Einsatzfälle erforderlichen, Formgestaltung ausgeführt und dem im Kraftfahrzeug zur Verfügung gestellten Raum angepaßt werden. Auch mit diesem Ausführungsbeispiel sind alle oben beschriebenen anderen Betriebsmodi mittels entsprechender Einstellung der Luftleitelemente **40, 50** und mittels der Einstellung der jeweiligen Betriebsart (ein/aus) des Heizers **1** und des Verdampfers **2** (Wärmepumpe ein/aus) ausführbar. Während des Trocknungsvorgangs verschließt das vor dem Wärmetauscher / Verdampfer **2** angeordnete Luftleitelement **40** dessen Wärmetauscherkern **5.** Das hinter dem Heizer **1** und dem Wärmetauscher / Verdampfer **2** angeordnete Luftleitelement **50** hat eine Stellung, in der wenigstens ein Teil der den Heizer **1** durchströmenden angewärmten und getrockneten Luft auf den Wärmetauscherkern **5** des Wärmetauschers / Verdampfers **2** umgelenkt wird, um denselben zu trocknen. Die dadurch feucht gewordene Luft, die den Verdampfer **2** verläßt, wird durch den geöffneten Feuchtluftauslass **30** in die Umgebung abgeleitet. Bei einer weiteren nicht gezeigten Modifikation sind der Heizer **1** und der Verdampfer **2** so angeordnet, dass der spitze Winkel α nach oben weist, wodurch eine andere Formgestaltung des Luftführungsgehäuses **3** möglich ist. Die Gestaltung der Luftleitelemente **40, 50** ist dort entsprechend angepasst worden. Ersichtlich ist ferner, dass der Winkel α nicht unbedingt ein spitzer Winkel sein muss, denn in einem weiteren nicht gezeigten Ausführungsbeispiel sind der Heizer **1** und der Verdampfer **2** rechtwinklig zueinander angeordnet.
Wie am Beispiel der Fig. 1 bereits beschrieben wurde, kann durch den teilweise geöffneten Auslass **10,** der zur Windschutzscheibe führt, etwas erwärmte Luft abgezweigt werden, um die Windschutzscheibe vor Beschlag zu bewahren.
Aus der Ansicht in Fig. 7, die eine Ansicht gemäß Pfeil **B** (Fig. 1) auf das Luftführungsgehäuse **3** ist und aus dem Schnitt in Fig. 8 ist zu erkennen, dass unterhalb des Verdampfers **2** ein ständig geöffneter Kondensatauslass **31** vorgesehen ist, durch den das abtropfende Kondensat das Luftführungsgehäuse **3** verlassen kann. Der Feuchtluftauslass **30** ist auch relativ weit unten, jedoch oberhalb des Kondensatauslasses **31** im Luftführungsgehäuse **3** angeordnet. In vorteilhafter Weise ist der Feuchtluftauslass **30** so im Luftführungsgehäuse **3** angeordnet, dass die den Verdampfer **2** durchströmende und angefeuchtete Luft auf direktem kurzen Weg, das Luftführungsgehäuse **3** verlassen kann.

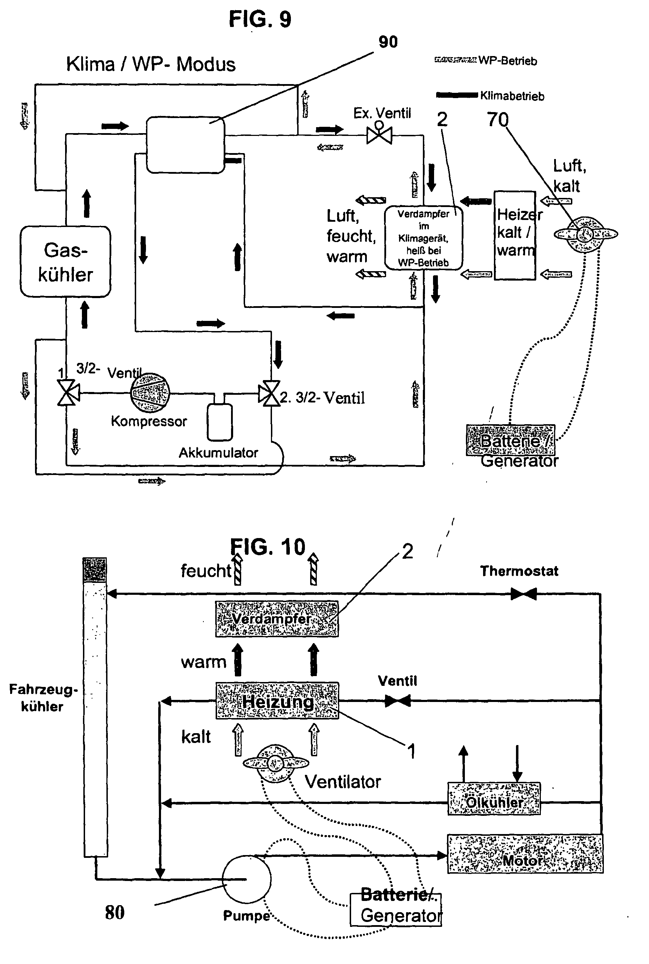

In der Fig. 9 zeigen die schwarzen Pfeile die Zirkulation des Kältemittels im Klimabetrieb und die grauen Pfeile zeigen die Zirkulation des Kältemittels im Wärmepumpenbetrieb. Die Klimaanlage weist einen Hochdruckkreislauf und einen Niederdruckkreislauf auf. Im Anschluss an den Kompressor beginnt der Hochdruckkreislauf des Kältemittels, denn der Kompressor komprimiert das Kältemittel bis auf das erforderliche hohe Niveau. Das erste 3/2 - Ventil ist im Klimabetrieb zum Gaskühler hin geöffnet, so dass das Kältemittel in den Gaskühler einströmen und dort gekühlt werden kann. Der Gaskühler ist gewöhnlich vor dem Kühlflüssigkeitskühler des Kraftfahrzeuges angeordnet (nicht gezeigt) und wird mittels Kühlluft außen durchströmt. Das somit abgekühlte Kältemittel durchströmt einen Zwischenwärmetauscher **90** wo es mit Kältemittel, das aus dem Verdampfer **2** kommt in einen Wärmeaustausch tritt, um noch weiter abgekühlt zu werden. Nach dem Zwischenwärmetauscher **90** gelangt das Kältemittel zum vor dem Klimagerät in der Zuströmleitung angeordneten Expansionsventil, wo der Druck des Kältemittels entspannt wird, wodurch sich eine deutliche Temperaturabsenkung einstellt. Danach beginnt der Niederdruckkreislauf. Im im Klimagerät befindlichen Verdampfer **2** wird die Kälte an den ihn durchströmenden Luftstrom übertragen, der mittels des Gebläses **70** durch den Verdampfer **2** geblasen wird, um als klimatisierte Luft für den Innenraum des Kraftfahrzeuges zur Verfügung zu stehen. Nach der Durchströmung des bereits erwähnten Zwischenwärmetauschers **90** gelangt das Kältemittel über das zweite 3/2-Ventil zu einem Akkumulator und erneut zum Kompressor, wodurch der Kreis geschlossen ist. Für den Wärmepumpenbetrieb wird das erste 3/2-Ventil umgeschaltet, so dass die zum Gaskühler führende Leitung geschlossen und die - im Bild nach unten - zum Klimagerät führende Leitung geöffnet ist. Der Verdampfer **2** im Klimagerät funktioniert jetzt als Gaskühler, d. h. er gibt Wärme an den ihn durchströmenden Luftstrom ab, der wie beschrieben mittels des Gebläses **70** gefördert wird. Das dadurch gekühlte Kältemittel strömt gemäß den grauen Pfeilen über das Expansionsventil, um expandiert zu werden. Der Gaskühler vor dem Kühlflüssigkeitskühler arbeitet jetzt als Verdampfer und kühlt den ihn durchströmenden Luftstrom. Nach dessen Durchströmung tritt das Kältemittel in eine Bypass - Leitung ein, um über das ebenfalls umgeschaltete zweite 3/2-Ventil zurück zum Akkumulator zu gelangen. Zur Trocknung des feucht gewordenen Verdampfers **2** im Klimagerät während des Betriebes der Klimaanlage und des Antriebsmotors wird der Verdampfer **2** im Klimagerät, wie vorstehend beschrieben, auf Gaskühlerbetrieb geschaltet. Dann werden - wie in Fig. 1 gezeigt und beschrieben wurde - die Luftleitelemente **40, 50** so eingestellt, dass der vom Gebläse **70** geförderte Luftstrom **60** zunächst den Heizer **1** und dann den Wärmetauscher / Verdampfer **2** durchströmt, um den Verdampfer **2** zu trocknen. Der feuchte Luftstrom wird über den geöffneten Feuchtluftauslass **30** in die Umgebung entlassen. In dieser Betriebsweise kann der Heizer **1** von der heissen Kühlflüssigkeit durchströmt werden oder auch nicht durchströmt werden. Dies hängt u. a. davon ab, ob genügend Wärme zur Verfügung steht, wie der Zustand (Temperatur, Feuchte) der Gebläseluft ist und wie lange der Trocknungsprozess andauern soll. Auf die beschriebene Reihenfolge der Verfahrensschritte kommt es nicht an. Wichtig ist, dass alle Verfahrensschritte ausgeführt werden. Zuerst könnten selbstverständlich auch die Luftleitelemente **40, 50** in die entsprechende Stellung gebracht werden, um danach die Umschaltung des Verdampfers **2** auf Gaskühlerbetrieb vorzunehmen. Ferner könnten diese Arbeitsschritte auch gleichzeitig erfolgen.

Das andere Trocknungsverfahren läuft nach dem Stillstand des Antriebsmotors ab und soll nachfolgend beschrieben werden. Das Gebläse **70** und die Kühlmittelpumpe **80** (Fig. 10) werden mit der Abschaltung des Antriebsmotors zu Lasten der Batterie eingeschaltet oder automatisch von der Lichtmaschine auf die Batterie umgeschaltet, um weiter in Betrieb zu sein. Der Heizer **1** wird demzufolge von der noch heissen Kühlflüssigkeit durchströmt. Die Gebläseluft **60** wird wesentlich erwärmt und deren relative Feuchte reduziert. Der vorgewärmte und vorgetrocknete Luftstrom wird durch den feuchten Wärmetauscherkern **5** des Verdampfers **2** geschickt und trocknet denselben ab. Die feuchte Luft wird danach durch den geöffneten Feuchtluftauslass **30** in die Umgebung abgeleitet. Mit dem Abschluss der Trocknung werden die Kühlmittelpumpe **80** und das Gebläse **70** abgeschaltet. Die Kühlmittelpumpe **80** könnte, falls genügend Restwärme des Antriebsmotors gespeichert ist, bereits vor der Abschaltung des Gebläses **70** ausgeschaltet werden, um den Energieverbrauch der Batterie zu schonen. Auch die Klappe **24** des Feuchtluftauslasses **30** kann geschlossen werden, weil dieselbe ohnehin in allen anderen Betriebsmodi geschlossen sein sollte.

## Patentansprüche

1. Anordnung in einer Klimaanlage für Kraftfahrzeuge, mit einem Heizer (1) und einem Verdampfer (2), die in einem Luftführungsgehäuse (3) mit ihren Wärmetauscherkernen (4, 5) entweder etwa in einer gemeinsamen Ebene (6) liegend angeordnet sind oder so angeordnet sind, dass die Ebenen der beiden Wärmetauscherkerne (4, 5) einen Winkel einschließen; das Luftführungsgehäuse (3) weist mindestens einen Gebläselufteintritt (7) und mehrere Luftaustritte (8, 9, 10, 11) auf, denen Verschlußmechanismen (20, 21, 22, 23) zugeordnet sind, wobei die Verschlußmechanismen entsprechend den gewünschten Betriebsarten der Klimaanlage einstellbar sind,
**dadurch gekennzeichnet, dass**
innerhalb des Luftführungsgehäuses (3) vor und hinter den zwei Wärmetauschern (1, 2) jeweils mindestens ein verstellbares Luftleitelement (40, 50) angeordnet ist, mittels derer die luftseitige Durchströmung der Wärmetauscher (1, 2) beeinflussbar ist,
dass eine Betriebsart Trocknung des Wärmetauscherkerns (5) des Verdampfers / Wärmetauschers (2) vorgesehen ist, wobei das vor beiden Wärmetauschern (1, 2) angeordnete Luftleitelement die Durchströmung des Wärmetauscherkerns (5) des Verdampfers / Wärmetauschers (2) im wesentlichen blockiert und das hinter den beiden Wärmetauschern (1, 2) angeordnete Luftleitelement (50) geöffnet ist, so dass der Gebläseluftstrom (60) zuerst den Wärmetauscherkern (4) des Heizers / Wärmetauschers (1) und dann den Wärmetauscherkern (5) des Verdampfers / Wärmetauschers (2) durchströmt,
und dass ein zumindest während des Trocknungsvorgangs geöffneter Auslass (30) im Luftführungsgehäuse (3) vorgesehen ist, durch den den Wärmetauscherkern (5) des Verdampfers / Wärmetauschers (2) durchströmende und feucht gewordene Luft an die Umgebung abführbar ist.

2. Anordnung nach Anspruch 1, **dadurch gekennzeichnet, dass** das hinter den Wärmetauschern (1, 2) angeordnete Luftleitelement (50) in der Betriebsart "Trocknung" zumindest einen Teil des Luftstroms in Richtung des Verdampfers / Wärmetauschers (2) leitet.

3. Anordnung nach Anspruch 1 und 2, **dadurch gekennzeichnet, dass** der dem zur Frontscheibe führenden Luftauslass (10) zugeordnete Verstellmechanismus (21) während der Trocknung vorzugsweise gering geöffnet ist und die Verstellmechanismen (20, 22) an den anderen Luftaustritten (9, 11) in der Schließstellung (b) sind.

4. Anordnung nach Anspruch 1 und 2, **dadurch gekennzeichnet, dass** beide Luftleitelemente (40, 50) mit ihren Verstellachsen (41, 51) vorzugsweise etwa in einer zwischen den beiden Wärmetauschern (1, 2) verlaufenden Ebene angeordnet sind.

5. Anordnung nach den Ansprüchen 1 bis 4, **dadurch gekennzeichnet, dass** der Auslass (30) im Luftführungsgehäuse (3) in der Nähe des Verdampfers / Wärmetauschers (2) und in Richtung der seinen Wärmetauscherkern (5) trocknenden ihn durchströmenden Luft, hinter dem Verdampfer / Wärmetauscher (2) angeordnet ist, um die feuchte Luft auf kurzem Weg in die Umgebung zu leiten.

6. Anordnung nach einem der vorstehenden Ansprüche, **dadurch gekennzeichnet, dass** der Verdampfer / Wärmetauscher (2) als Kondensator / Gaskühler (2) betreibbar ist, so dass ein Betriebsmodus "Wärmepumpe" ausführbar ist, wobei in den Betriebsmodi "Wärmepumpe" und "reine Klimatisierung" das vor den Wärmetauschern (1, 2) angeordnete Luftleitelement (40) geöffnet und das hinter den Wärmetauschern (1, 2) angeordnete Luftleitelement (50) geschlossen ist.

7. Anordnung nach einem der Ansprüche 1 bis 6, **dadurch gekennzeichnet, dass** in den Betriebsmodi "Heizung", "Mischluft" und "Frischluft" beide Luftleitelemente (40, 50) in geöffneter Stellung sind, wobei mittels der Stellung der Luftleitelemente (40, 50) das Mischungsverhältnis der Luft im hinter den Wärmetauschern (1, 2) angeordneten Luftmischraum (33) einstellbar ist

8. Verfahren zur Trocknung der Verdampferoberfläche bei einer Anordnung in einer Klimaanlage für Kraftfahrzeuge und mit einem Kühlflüssigkeitskreislauf, wobei die Gebläseluft durch den Verdampfer (2) geleitet wird, um danach durch einen Auslass (30) im Luftführungsgehäuse (3) in die Umgebung abgeleitet zu werden,
**dadurch gekennzeichnet,**
**dass** der Verdampfer (2) auf Kondensator / Gaskühler - Betrieb geschaltet wird,
und **dass** die Gebläseluft zuerst durch den von Kühlflüssigkeit beheizten oder nicht beheizten Heizer (1) und danach durch den Kondensator / Gaskühler (2) geschickt wird.

9. Verfahren zur Trocknung der Verdampferoberfläche bei einer Anordnung in einer Klimaanlage für Kraftfahrzeuge und mit einem Kühlflüssigkeitskreislauf, wobei die Gebläseluft durch den Verdampfer (2) geleitet wird, um danach durch einen Auslass (30) im Luftführungsgehäuse (3) in die Umgebung abgeleitet zu werden,
**dadurch gekennzeichnet, dass**
der Trocknungsvorgang nach der Abschaltung des Antriebsmotors durchgeführt wird,
dass zur Ausnutzung der Restwärme des Antriebsmotors die elektrische Kühlflüssigkeitspumpe (80) und das Gebläse (70) nach der Abschaltung des Antriebsmotors in Betrieb bleiben oder gesetzt werden,
dass die Gebläseluft zunächst durch den von Kühlflüssigkeit beheizten Heizer (1) und danach durch den Verdampfer (2) geschickt wird,
und dass die Kühlflüssigkeitspumpe (80) und das Gebläse (70) ausgeschaltet werden.

10. Verfahren nach Anspruch 9, **dadurch gekennzeichnet, dass** die Kühlflüssigkeitspumpe (80) vorzugsweise kurz vor oder gemeinsam mit der Beendigung des Trocknungsvorganges bzw. der Abschaltung des Gebläses (70) abgeschaltet wird.

## Claims

1. Arrangement in an air conditioning system for motor vehicles, with a heater (1) and with an evaporator (2) which are arranged in an air guide housing (3) either with their heat exchanger cores (4, 5) approximately in a common plane (6) or in such a way that the planes of the two heat exchanger cores (4, 5) form an angle, the air guide housing (3) having at least one blower-air inlet (7) and a plurality of air outlets (8, 9, 10, 11) which are assigned closing mechanisms (20, 21, 22, 23), the closing mechanisms being capable of being set according to the desired operating modes of the air conditioning system, **characterized in that** the air guide housing (3) has arranged inside it, in front of and behind the two heat exchangers (1, 2), in each case at least one adjustable air guide element (40, 50), by means of which the air-side throughflow of the heat exchangers (1, 2) can be influenced, **in that** an operating mode for drying the heat exchanger core (5) of the evaporator/heat exchanger (2) is provided, the air guide element arranged in front of the two heat exchangers (1, 2) essentially blocking the throughflow of the heat exchanger core (5) of the evaporator/heat exchanger (2), and the air guide element (50) arranged behind the two heat exchangers (1, 2) being opened, so that the blower air stream (60) flows first through the heat exchanger core (4) of the heater/heat exchanger (1) and then through the heat exchanger core (5) of the evaporator/heat exchanger (2), and **in that** the air guide housing (3) has provided in it an outlet (30) which is opened at least during the drying operation and through which moistened air flowing through the heat exchanger core (5) of the evaporator/heat exchanger (2) can be discharged into the surroundings.

2. Arrangement according to Claim 1, **characterized in that**, in the "drying" operating mode, the air guide element (50) arranged behind the heat exchangers (1, 2) conducts at least part of the air stream in the direction of the evaporator/heat exchanger (2).

3. Arrangement according to Claims 1 and 2, **characterized in that**, during drying, the adjustment mechanism (21) assigned to the air outlet (10) leading to the front windscreen is preferably opened slightly and the adjusting mechanisms (20, 22) at the other air outlets (9, 11) are in the closing position (b).

4. Arrangement according to Claims 1 and 2, **characterized in that** the two air guide elements (40, 50) are arranged with their adjustment axes (41, 51) preferably approximately in a plane running between the two heat exchangers (1, 2).

5. Arrangement according to Claims 1 to 4, **characterized in that** the outlet (30) in the air guide housing (3) is arranged in the vicinity of the evaporator/heat exchanger (2) and, in the direction of the air drying its heat exchanger core (5) and flowing through it, behind the evaporator/heat exchanger (2), in order to conduct the moist air into the surroundings over a short distance.

6. Arrangement according to one of the preceding claims, **characterized in that** the evaporator/heat exchanger (2) can be operated as a condenser/gas cooler (2), so that a "heat pump" operating mode can be implemented, in the "heat pump" and "pure air conditioning" operating modes the air guide element (40) arranged in front of the heat exchangers (1, 2) being opened and the air guide element (50) arranged behind the heat exchangers (1, 2) being closed.

7. Arrangement according to one of Claims 1 to 6, **characterized in that**, in the "heating", "mixed air" and "fresh air" operating modes, the two air guide elements (40, 50) are in the open position, the mixture ratio of the air in the air mixing space (33) arranged behind the heat exchangers (1, 2) being capable of being set by means of the position of the air guide elements (40, 50).

8. Method for drying the evaporator surface in an arrangement in an air conditioning system for motor vehicles and with a cooling-liquid circuit, the blower air being conducted through the evaporator (2), in order thereafter to be discharged into the surroundings through an outlet (30) in the air guide housing (3), **characterized in that** the evaporator (2) is switched to condenser/gas-cooler operation, and **in that** the blower air is fed first through the heater (1) heated by cooling liquid or not heated and thereafter through the condenser/gas cooler (2).

9. Method for drying the evaporator surface in an arrangement in an air conditioning system for motor vehicles and with a cooling-liquid circuit, the blower air being conducted through the evaporator (2), in order thereafter to be discharged into the surroundings through an outlet (30) in the air guide housing (3), **characterized in that** the drying operation is carried out after the drive motor has been switched off, **in that**, to utilize the residual heat of the drive motor, the electrical cooling-liquid pump (80) and the blower (70) remain in operation or are put into operation after the drive motor has been switched off, **in that** the blower air is fed first through the heater (1) heated by cooling liquid and thereafter through the evaporator (2), and **in that** the cooling-liquid pump (80) and the blower (70) are switched off.

10. Method according to Claim 9, **characterized in that** the cooling-liquid pump (80) is switched off preferably shortly before or together with the termination of the drying operation or the switch-off of the blower (70).

## Revendications

1. Aménagement dans une installation de climatisation pour véhicules automobiles, avec un chauffage (1) et un évaporateur (2), qui sont disposés à plat dans un boîtier de ventilation (3) avec leurs coeurs d'échangeurs de chaleur (4, 5) approximativement dans un plan commun (6) ou disposés de telle façon que les plans des deux coeurs d'échangeurs de chaleur (4, 5) renferment un angle; le boîtier de ventilation (3) présente au moins une admission d'air pour ventilateur (7) et plusieurs sorties d'air (8, 9, 10, 11), auxquelles sont associés des mécanismes de fermeture (20, 21, 22, 23), les mécanismes de fermeture étant réglables selon les modes de fonctionnement souhaités du climatiseur,
**caractérisé en ce que**,
à l'intérieur du boîtier de ventilation (3), devant et derrière les deux échangeurs de chaleur (1, 2), est disposé à chaque fois au moins un élément déflecteur d'air réglable (40, 50), au moyen duquel l'écoulement du côté de l'air traversant les échangeurs de chaleur (1, 2) peut être influencé, **en ce qu'**un mode de fonctionnement pour le séchage du coeur de l'échangeur de chaleur (5) de l'évaporateur/échangeur de chaleur (2) est prévu, l'élément déflecteur d'air disposé devant les deux échangeurs de chaleur (1, 2) bloquant essentiellement l'écoulement à travers le coeur d'échangeur de chaleur (5) de l'évaporateur/échangeur de chaleur (2) et l'élément déflecteur d'air (50) disposé derrière les deux échangeurs de chaleur (1, 2) étant ouvert, de sorte que le courant d'air de ventilateur (60) s'écoule d'abord à travers le coeur d'échangeur de chaleur (4) du chauffage/échangeur de chaleur (1) puis à travers le coeur d'échangeur de chaleur (5) de l'évaporateur/échangeur de chaleur (2),
et **en ce qu'**une évacuation (30) ouverte au moins pendant le processus de séchage, est prévue dans le boîtier de ventilation (3), à travers laquelle l'air traversant le coeur d'échangeur de chaleur (5) de l'évaporateur/échangeur de chaleur (2) et devenu humide, peut être évacué dans l'environnement.

2. Aménagement selon la revendication 1, **caractérisé en ce que** l'élément déflecteur (50) disposé derrière les échangeurs de chaleur (1, 2) dans le mode de fonctionnement "séchage" dirige au moins une partie du courant d'air en direction de l'évaporateur/échangeur de chaleur (2).

3. Aménagement selon la revendication 1 et 2, **caractérisé en ce que** le mécanisme de réglage (21) associé à l'évacuation d'air (10) conduisant vers la vitre avant, est de préférence à peine ouvert pendant le séchage, et les mécanismes de réglage (20, 22) sont dans la position de fermeture (b) au niveau des autres sorties d'air (9, 11).

4. Aménagement selon la revendication 1 et 2, **caractérisé en ce que** les deux éléments déflecteurs d'air (40, 50) avec leurs axes de réglage (41, 51), sont disposés de préférence approximativement dans un plan s'étendant entre les deux échangeurs de chaleur (1, 2).

5. Aménagement selon les revendications 1 à 4, **caractérisé en ce que** l'évacuation (30) dans le boîtier de ventilation d'air (3) est disposée à proximité de l'évaporateur/échangeur de chaleur (2) et dans la direction de l'air le traversant, séchant son coeur d'échangeur de chaleur (5), derrière l'évaporateur/échangeur de chaleur (2), afin de conduire l'air humide par un chemin court dans l'environnement.

6. Aménagement selon l'une quelconque des revendications précédentes, **caractérisé en ce que**, l'évaporateur/échangeur de chaleur (2) peut être exploité en tant que condenseur/refroidisseur de gaz (2) de sorte à pouvoir réaliser un mode de fonctionnement "pompe à chaleur", l'élément déflecteur d'air (40) disposé devant les échangeurs de chaleur (1, 2) étant ouvert et l'élément déflecteur d'air (50) disposé derrière les échangeurs de chaleur (1, 2) étant fermé dans les modes de fonctionnement "pompe à chaleur" et "climatisation pure".

7. Aménagement selon l'une quelconque des revendications 1 à 6, **caractérisé en ce que** les deux éléments déflecteurs d'air (40, 50) sont dans la position ouverte dans les modes de fonctionnement "chauffage" "air mélangé" et "air frais", le rapport de mélange de l'air dans la chambre de mélange d'air (33) disposée derrière les échangeurs de chaleur (1, 2) étant réglable à l'aide de la position des éléments déflecteurs d'air (40, 50).

8. Procédé pour sécher la surface d'évaporateur pour un aménagement dans une installation de climatisation pour véhicules automobiles et avec une circulation de liquide réfrigérant, l'air du ventilateur étant dirigé à travers l'évaporateur (2), afin de pouvoir être évacué ensuite dans l'environnement à travers une évacuation (30) dans le boîtier de ventilation (3),
**caractérisé en ce que**,
l'évaporateur (2) est commuté sur le fonctionnement condenseur/refroidisseur de gaz,
et **en ce que** l'air du ventilateur est envoyé d'abord à travers le chauffage (1) chauffé ou non chauffé par le liquide réfrigérant, puis à travers le condenseur/refroidisseur de gaz (2).

9. Procédé pour sécher la surface d'évaporateur pour un aménagement dans une installation de climatisation pour véhicules automobiles et avec une circulation de liquide réfrigérant, l'air du ventilateur étant conduit à travers l'évaporateur (2), afin de pouvoir être évacué dans l'environnement à travers une évacuation (30) dans le boîtier de ventilation (3),
**caractérisé en ce que**,
le processus de séchage est réalisé après arrêt du moteur d'entraînement,
**en ce que**, pour exploiter la chaleur résiduelle du moteur d'entraînement, la pompe électrique de liquide réfrigérant (80) et le ventilateur (70) restent ou sont mis en marche après arrêt du moteur d'entraînement,
**en ce que** l'air du ventilateur est envoyé d'abord à travers le chauffage (1) chauffé par le liquide réfrigérant, puis à travers l'évaporateur (2),
et que la pompe de liquide réfrigérant (80) et le ventilateur (70) sont mis hors circuit.

10. Procédé selon la revendication 9, **caractérisé en ce que** la pompe du liquide réfrigérant (80) est arrêtée de préférence peu de temps avant ou conjointement avec l'achèvement du processus de séchage, ou bien de l'arrêt du ventilateur (70).
